# EUROPEAN PATENT SPECIFICATION

(11) **EP 4 350 586 B1**
(45) Date of publication and mention of the grant of the patent: **02.09.2026**
(21) Application number: 22810934.4
(22) Date of filing: 14.03.2022
(51) Int. Cl.: G06Q 30/014, G06Q 30/0601, G06F 40/35

(54) **ANSWERING SYSTEM, TERMINAL DEVICE, ANSWERING METHOD, AND PROGRAM**
BEANTWORTUNGSSYSTEM, ENDGERÄTEVORRICHTUNG, BEANTWORTUNGSVERFAHREN UND PROGRAMM
SYSTÈME DE RÉPONSE, DISPOSITIF TERMINAL, PROCÉDÉ DE RÉPONSE ET PROGRAMME

(30) Priority: 28.05.2021 JP 2021090194
(43) Date of publication of application: 10.04.2024
(73) Proprietor: Panasonic Intellectual Property Management Co., Ltd., Osaka-shi, Osaka 540-6207 (JP)
(72) Inventor: SHIMAYA, Jiro, Osaka-shi, Osaka 540-6207 (JP); OGAWA, Kento, Osaka-shi, Osaka 540-6207 (JP); HITOTSUYA, Masashi, Osaka-shi, Osaka 540-6207 (JP)
(74) Representative: Novagraaf International SA
(86) International application number: PCT/JP2022/011317
(87) International publication number: WO 2022/249656

(56) References cited:
- JP-A- 2009 054 195
- JP-A- 2013 054 490
- US-A1- 2012 265 697
- US-A1- 2014 119 531
- US-A1- 2015 088 765

## Description

### [Technical Field]

The present disclosure relates to an answering system, a terminal device, an answering method, and a program for answering a user's question about a product.

### [Background Art]

Patent Literature (PTL) 1 discloses a question answering system that includes: a user interface (UI) server which provides an interactive user interface; and a training data generation system. The UI server includes an input unit, a presenter, a receiver, and a transmitter. The input unit inputs a user's inquiry. The presenter outputs the inquiry to an answer generation engine. The receiver receives, from the answer generation engine, an answer which is derived by the answer generation engine in response to the inquiry and to which information on an emotional expression corresponding to the user's emotion estimated based on the content of the user's question is added. The transmitter transmits the received answer to the user.

### [Citation List]

### [Patent Literature]

[PTL 1] Japanese Unexamined Patent Application Publication No. 2019-117517

The document US 2012/265697 which discloses an answering system reflecting the preamble of present claim 1.

Further art is disclosed by the documents US 2015/088765 and US 2014/119531.

### [Summary of Invention]

### [Technical Problem]

The present disclosure provides, for example, an answering system that facilitates reduction of time and effort spent by a user to obtain an answer regarding a question-target product.

### [Solution to Problem]

An answering system according to the present invention is defined in the appended claims.

A terminal device according to an aspect of the present disclosure includes a communicator and a display. The communicator communicates with the answering system. When the communicator receives the candidate answer presented by the presenter of the answering system, the display displays the candidate answer received.

An answering method according to the present invention is further defined in the appended claims..

A program according to an aspect of the present disclosure causes one or more processors to execute the answering method.

### [Advantageous Effects of Invention]

The answering system and so on according to the present disclosure produce an advantage of facilitating reduction of time and effort spent by a user to obtain an answer regarding a question-target product.

### [Brief Description of Drawings]

[FIG. 1]

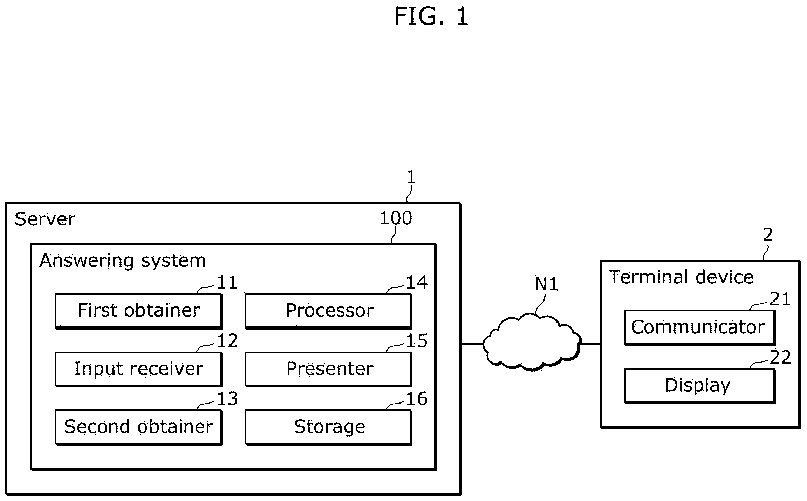

   FIG. 1 is a block diagram illustrating a configuration of an answering system according to an embodiment.
[FIG. 2]

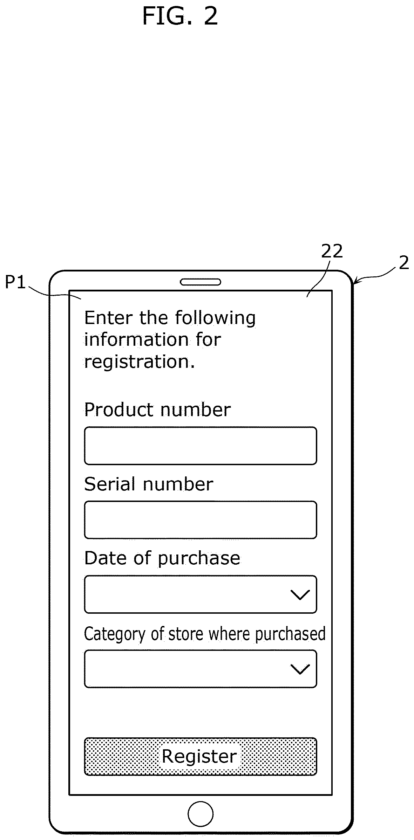

   FIG. 2 is a diagram illustrating an example of a registration screen displayed on a terminal device according to the embodiment.
[FIG. 3A]

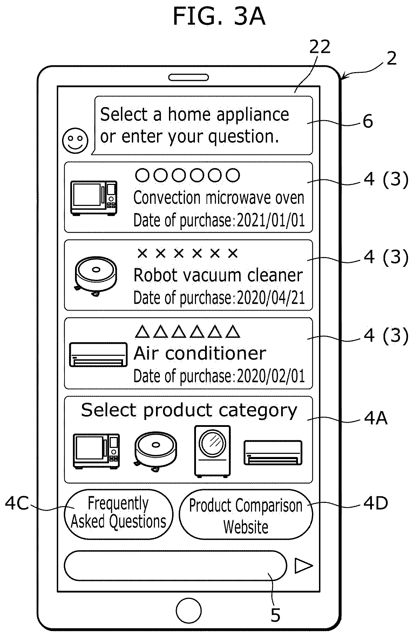

   FIG. 3A is a diagram illustrating an example of options displayed on the terminal device according to the embodiment.
[FIG. 3B]

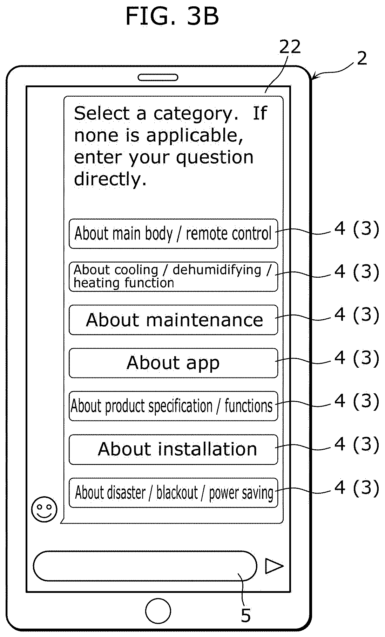

   FIG. 3B is a diagram illustrating another example of options displayed on the terminal device according to the embodiment.
[FIG. 3C]

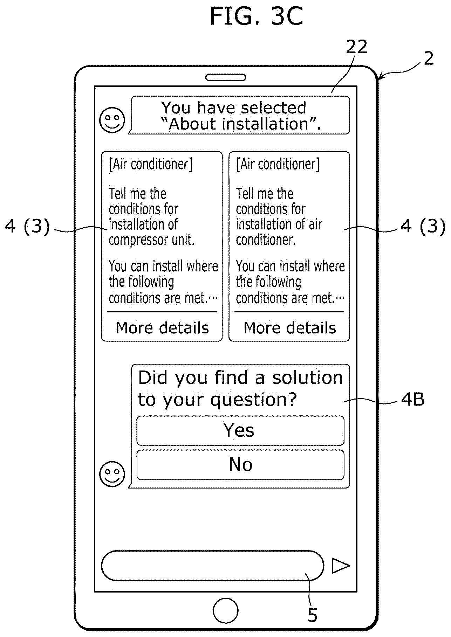

   FIG. 3C is a diagram illustrating yet another example of options displayed on the terminal device according to the embodiment.
[FIG. 4]

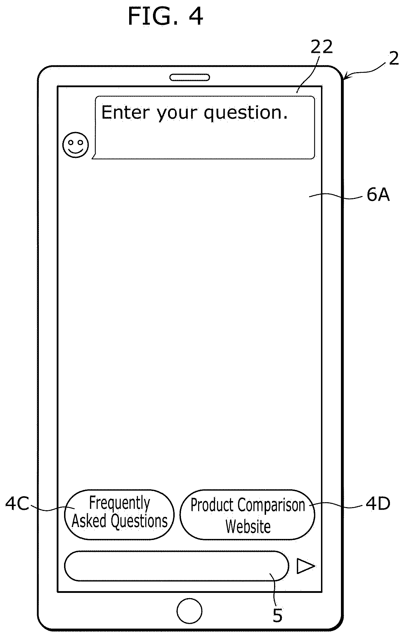

   FIG. 4 is an explanatory diagram of Presentation Example 1 of the answering system according to the embodiment.
[FIG. 5A]

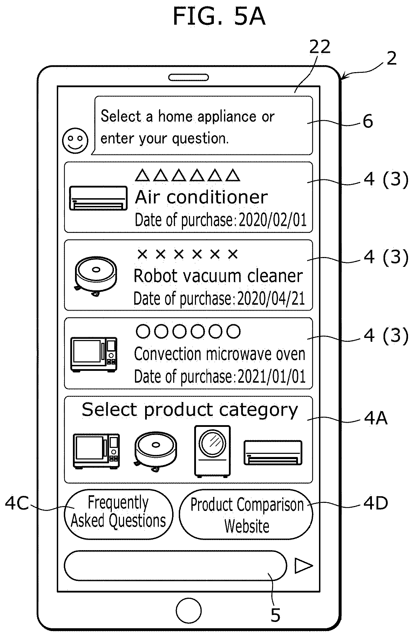

   FIG. 5A is an explanatory diagram of Presentation Example 2 of the answering system according to the embodiment.
[FIG. 5B]

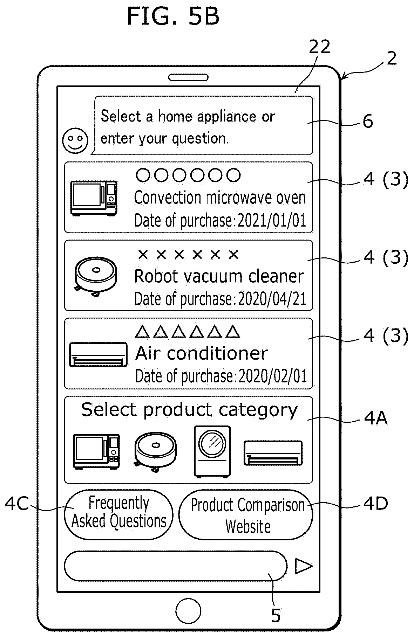

   FIG. 5B is an explanatory diagram of Presentation Example 2 of the answering system according to the embodiment.
[FIG. 6A]

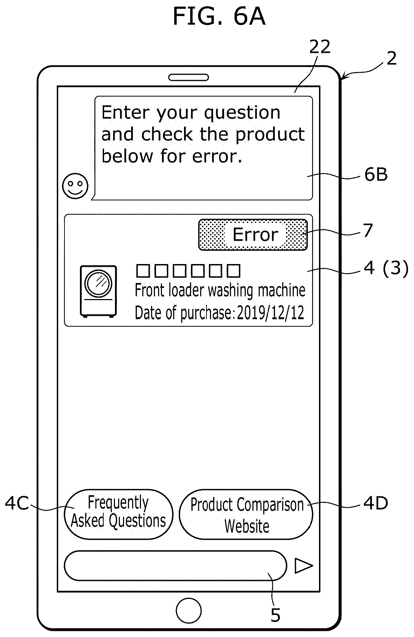

   FIG. 6A is an explanatory diagram of Presentation Example 3 of the answering system according to the embodiment.
[FIG. 6B]

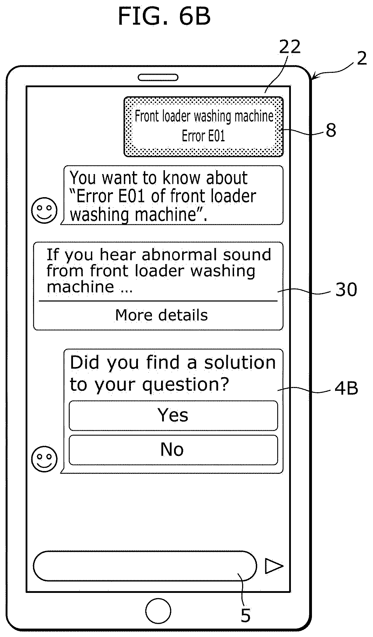

   FIG. 6B is an explanatory diagram of Presentation Example 3 of the answering system according to the embodiment.
[FIG. 7]

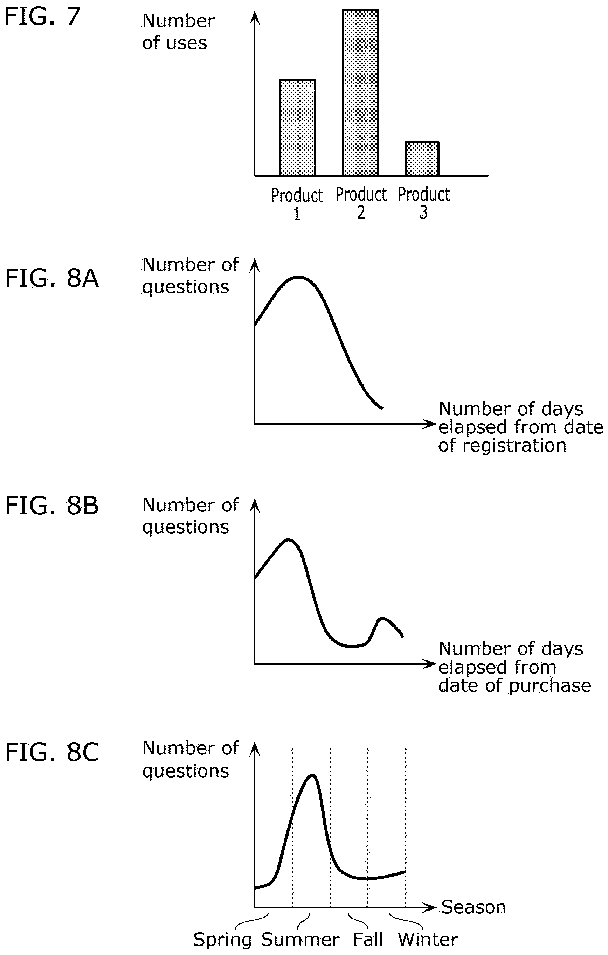

   FIG. 7 is an explanatory diagram of Presentation Example 4 of the answering system according to the embodiment.
[FIG. 8A]
   FIG. 8A is an explanatory diagram of Presentation Example 5 of the answering system according to the embodiment.
[FIG. 8B]
   FIG. 8B is an explanatory diagram of Presentation Example 5 of the answering system according to the embodiment.
[FIG. 8C]
   FIG. 8C is an explanatory diagram of Presentation Example 5 of the answering system according to the embodiment.
[FIG. 9A]

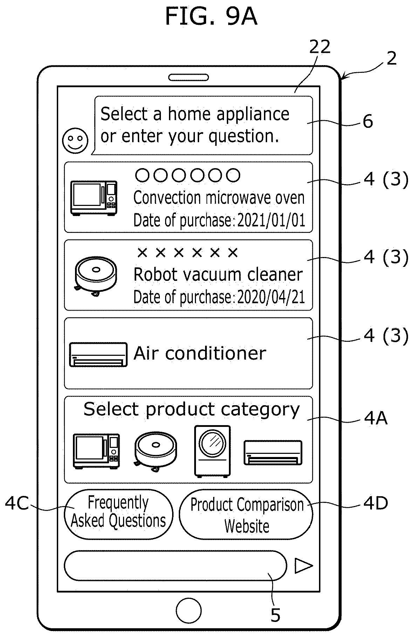

   FIG. 9A is an explanatory diagram of Presentation Example 6 of the answering system according to the embodiment.
[FIG. 9B]

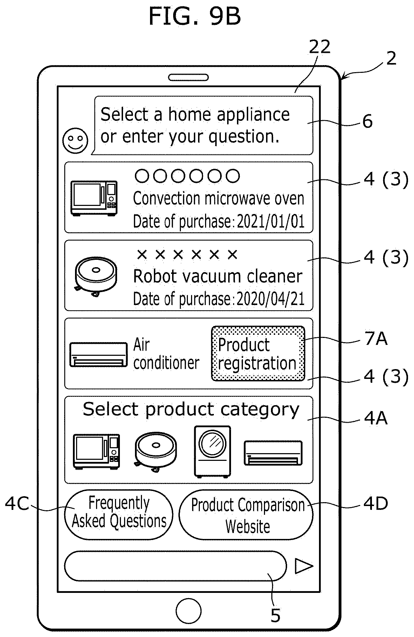

   FIG. 9B is an explanatory diagram of Presentation Example 6 of the answering system according to the embodiment.
[FIG. 10]

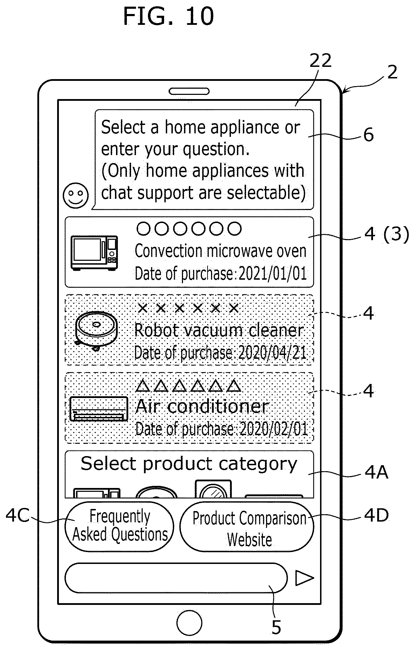

   FIG. 10 is an explanatory diagram of Presentation Example 7 of the answering system according to the embodiment.
[FIG. 11A]

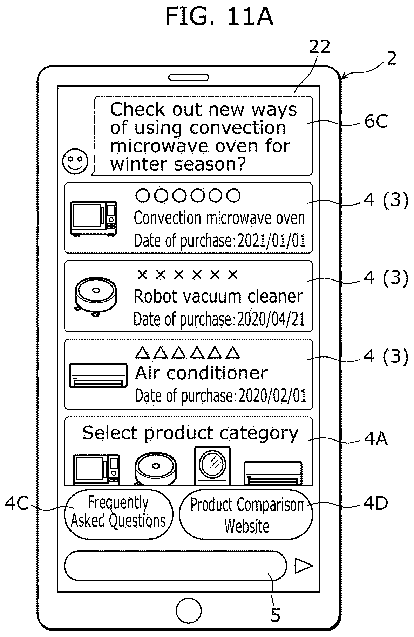

   FIG. 11A is an explanatory diagram of Presentation Example 8 of the answering system according to the embodiment.
[FIG. 11B]

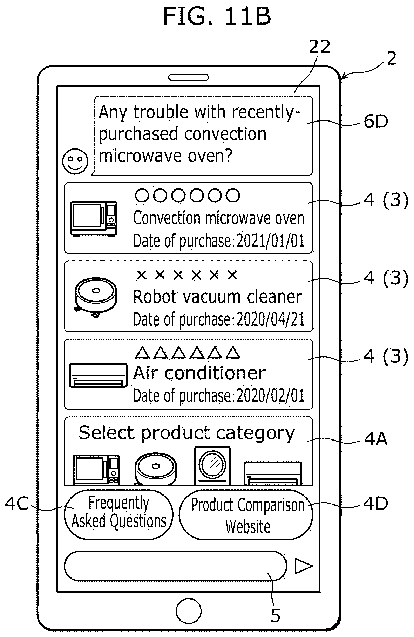

   FIG. 11B is an explanatory diagram of Presentation Example 8 of the answering system according to the embodiment.
[FIG. 12]

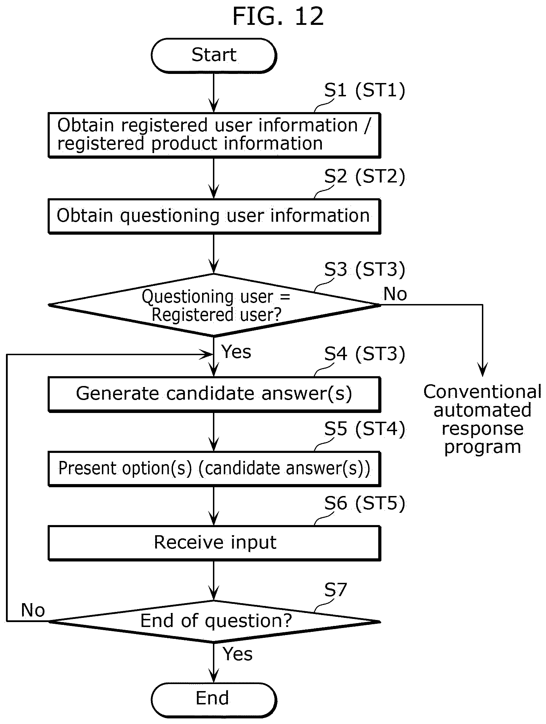

   FIG. 12 is a flowchart illustrating an operation example of the answering system according to the embodiment.
[FIG. 13]

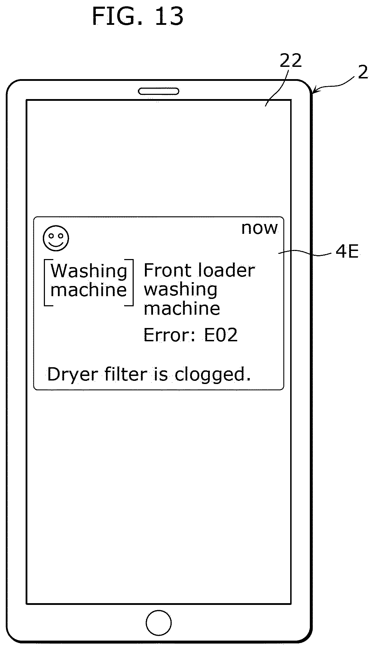

   FIG. 13 is a diagram illustrating an example of a screen displayed on a terminal device according to a variation of the embodiment.

### [Description of Embodiment]

### (Underlying Knowledge Forming Basis of the Present Disclosure)

First, the focus of the inventors' observation will be described below.

For example, when a user wants to know something about a product such as a home appliance, the user may use an interactive automated response program such as a chatbot that employs artificial intelligence (AI) technology. For example, when some kind of error occurs in a product that the user owns, the user may use the automated response program to find out how to solve the error. The automated response program can be executed on, for example, a terminal device such as a smartphone owned by the user.

For example, when using the automated response program, the user can adopt one of two methods: a selection method in which the user selects an answer from candidate answers sequentially presented by the automated response program; and a free input method in which the user freely enters a question. With the selection method, the automated response program presents candidate answers to the user and the user selects an answer from the candidate answers presented, and this flow is repeated. With the free input method, the user enters a question for which the user thinks a desired answer may be possibly obtained, the automated response program presents candidate answers to the question to the user, and the user selects an answer from the candidate answers presented. With either method, the automated response program ultimately presents to the user one or more answers that are estimated to be desired by the user.

With the conventional automated response program (answering system) such as the one described above, the following issues may arise. That is, with the selection method, the automated response program presents to the user a list of products as candidate answers, in order to identify a question-target product, that is, the product which the user is asking a question about. The user then finds and selects the question-target product from the list of products presented. Here, the list of products includes not only the question-target product but also other products. Therefore, the user has to spend time and effort to find the question-target product from among a large number of products. For example, when the question-target product is a "front loader washing machine", the user first needs to find and select "washing machine" from among product categories presented by the automated response program, and then select "front loader" from among sub-categories of "washing machine" presented by the automated response program.

Also, with the free input method, no problem arises if the user enters a question with some details, but there are cases where the user enters a vague question. In such a case, the automated response program may be unable to narrow down the question-target products, and may present to the user a large number of candidate answers to the question entered. Therefore, the user has to spend time and effort to find a candidate answer that corresponds to the question-target product from among the large number of candidate answers. Suppose an example case where the user enters a question "filter cleaning" to find out how to clean the filter of a front loader washing machine. In such a case, the automated response program presents to the user not only a candidate answer regarding filter cleaning of the front loader washing machine, but also candidate answers regarding filter cleaning of other home appliances. Therefore, the user needs to find and select the candidate answer regarding filter cleaning of the front loader washing machine from among a large number of candidate answers.

As described above, the conventional automated response program (answering system) has a problem that the user has to spend time and effort to obtain an answer regarding the question-target product. The above circumstances have led the inventors to conceive the present disclosure.

Hereinafter, an embodiment will be described in detail with reference to the drawings where appropriate. Unnecessarily detailed descriptions, however, may be omitted. For example, detailed descriptions of well-known aspects or repetitive descriptions of essentially the same configurations may be omitted. This is to avoid unnecessary redundancy and facilitate the understanding of those skilled in the art.

Note that the inventors provide the accompanying drawings and the following description not to limit the subject matters of the claims but to enable those skilled in the art to fully understand the present disclosure.

### [Embodiment]

### [1. Configuration]

FIG. 1 is a block diagram illustrating a configuration of answering system 100 according to the embodiment. Answering system 100 is an interactive system that answers (automatically responds to) a user's question about a product. The term "user" is a generic term for a person who uses a product, and may include a registered user and a questioning user which will be described later. The term "product" is a generic term for an appliance that the user uses by purchasing or renting. In the embodiment, products are home appliances such as a vacuum cleaner, washing machine, refrigerator, air cleaner, toilet bowl, and air conditioner. Here, the user's questions about products may include not only a question about a product that the user owns but also a question about a product that the user does not own.

In the embodiment, answering system 100 is included in server 1. Server 1 is, for example, capable of communicating with terminal device 2 via network N1 such as the Internet. Terminal device 2 may include, for example, a smartphone, a tablet terminal, or a desktop or laptop personal computer. In the embodiment, terminal device 2 is a smartphone. Also, in the embodiment, terminal device 2 is a user-owned device, but terminal device 2 may be a public device.

Terminal device 2 is a device that displays one or more options 4 (described later) presented by presenter 15 (described later). Terminal device 2 includes communicator 21 and display 22. Communicator 21 communicates with answering system 100. Communicator 21 communicates with server 1 via network N1. Other than wireless communication, the communication between communicator 21 and server 1 may also be wired communication. The communication standard for the communication between communicator 21 and server 1 is not particularly limited.

When communicator 21 receives one or more candidate answers 3 (options 4) presented by presenter 15 of answering system 100, display 22 displays one or more candidate answers 3 received. Display 22 is, for example, a liquid crystal display or an organic electroluminescent (EL) display. In the embodiment, display 22 is a touch panel display and also has the function of receiving an input from the user.

Server 1 (answering system 100) includes first obtainer 11, input receiver 12, second obtainer 13, processor 14, presenter 15, and storage 16. Note that in the embodiment, it is sufficient so long as server 1 includes first obtainer 11, input receiver 12, second obtainer 13, processor 14, and presenter 15, and server 1 does not have to include storage 16.

First obtainer 11 obtains registered user information and registered product information on the registered user information. First obtainer 11 is the constituent element that performs first obtaining ST1 included in the answering method.

A registered user is a user who has been registered in answering system 100 through a registration process performed by the user, and who can be recognized by answering system 100. The registered user information includes an identifier to identify the registered user individually. Note that other than full registration which is achieved by the user performing the registration process by himself/herself, the registration may include temporary registration (provisional registration) which is automatically performed by answering system 100 regardless of the user's intention.

A registered product is a product, among one or more products owned by the user, which is registered in answering system 100 through a registration process performed by the user and which can be recognized by answering system 100 as being associated with a registered user. The registered product information includes an identifier to identify the registered product individually.

In the embodiment, the user (registered user) performs the registration process by, for example, accessing a registration website using terminal device 2 or executing a registration application using terminal device 2. FIG. 2 is a diagram illustrating an example of registration screen P1 displayed on terminal device 2 for product registration according to the embodiment. In the registration process, the user enters information necessary for the product registration on registration screen P1 as illustrated in FIG. 2, for example. In the example illustrated in FIG. 2, registration screen P1 displays "product number", "serial number", "date of purchase", and "category of store where purchased" as the information necessary for the product registration.

The user also enters information necessary for user registration on a registration screen different from registration screen P1 described above. The information necessary for the user registration may include, for example, "user's name", "user's date of birth", and "user's gender". Also, the information necessary for the user registration may include, for example, "user account name" and "login password" that are used in, for instance, a login process which will be described later.

A signal including the information entered by the user with use of terminal device 2 is transmitted to answering system 100 via network N1. First obtainer 11 obtains the registered user information and the registered product information by receiving the signal transmitted from terminal device 2. The registered user information and registered product information obtained by first obtainer 11 are stored in storage 16.

Furthermore, in the embodiment, first obtainer 11 can also obtain the registered product information directly from the registered product by communicating with the registered product. Specifically, in the case where the registered product is an Internet of Things (IoT) device and has the function to communicate with answering system 100 via network N1, the registered product transmits a signal that includes state information indicating the state of the registered product itself to answering system 100 on a regular basis or at timing when the state changes. First obtainer 11 obtains the state information as the registered product information by receiving the signal transmitted from the registered product. The state information may include, for example, an operation parameter of the registered product or information indicating whether an error is occurring in the registered product.

Input receiver 12 receives an input related to a questioning user's question. Input receiver 12 is the constituent element that performs receiving ST5 included in the answering method. The questioning user is a user who asks a question to answering system 100, and is the same as the registered user in some cases and different from the registered user in other cases. In the embodiment, to ask a question to answering system 100, the questioning user starts using answering system 100 by, for example, accessing a question website using terminal device 2 or executing a question application using terminal device 2.

In the embodiment, with use of terminal device 2, for example, the user (questioning user) enters an input related to a question by selecting one option 4 from among one or more options 4 (described later) displayed on terminal device 2. The user also enters an input related to a question by entering a character string such as a keyword with use of terminal device 2, for example. That is to say, both the selection method and the free input method are available to the questioning user when using answering system 100.

A signal including the information that the user has entered using terminal device 2 is transmitted to answering system 100 via network N1. By receiving the signal transmitted from terminal device 2, input receiver 12 receives the input related to the question about a product.

Second obtainer 13 obtains questioning user information on the questioning user. Second obtainer 13 is the constituent element that performs second obtaining ST2 included in the answering method. The questioning user information includes an identifier to identify the questioning user individually.

In the embodiment, the questioning user performs a login process to ask a question to answering system 100 using terminal device 2 as described above. In the login process, with use of, for example, terminal device 2, the questioning user enters the "user account name" and "login password" registered in the registration process described above.

A signal including the information that the user has entered using terminal device 2 is transmitted to answering system 100 via network N1. Second obtainer 13 obtains the questioning user information by receiving the signal transmitted from terminal device 2.

Processor 14 generates one or more candidate answers 3 regarding the registered product information in response to the input related to the question, when the registered user information that matches the questioning user information obtained by second obtainer 13 is present (second obtaining ST2). Processor 14 is the constituent element that performs processing ST3 included in the answering method. Here, candidate answers 3 may include not only an answer that answering system 100 estimates as an answer desired by the questioning user but also information presented to the questioning user during the process that the user goes through until that answer is derived. In other words, candidate answers 3 may include not only the final answer to the question about the product but also information about which answering system 100 asks the questioning user in order to derive the final answer. Note that information on registered products (for example, a convection microwave oven, robot vacuum cleaner, and air conditioner) may also be included in candidate answers 3. The number of candidate answers 3 may be one, or may be greater than one.

In the embodiment, processor 14 performs a search to see whether registered user information (the identifier of the registered user) that matches the questioning user information (the identifier of the questioning user) obtained by second obtainer 13 is present in storage 16 which stores the registered user information and the registered product information for each registered user. When the registered user information that matches the questioning user information is present, processor 14 refers to the registered product information associated with that registered user information and generates one or more candidate answers 3 regarding one or more registered products indicated in that registered product information.

Presenter 15 presents one or more candidate answers 3 generated by processor 14 (processing ST3). Presenter 15 is the constituent element that performs presenting ST4 included in the answering method. The number of options 4 is the same as the number of candidate answers 3. Therefore, the number of options 4 may be one, or may be greater than one.

In the embodiment, presenter 15 presents one or more options 4 to the questioning user by transmitting a signal including one or more options 4 to terminal device 2. Specifically, when terminal device 2 receives the signal, terminal device 2 displays, on display 22, one or more options 4 included in the signal. As a result, by looking at display 22 of terminal device 2, the questioning user can check one or more options 4 presented by presenter 15.

FIG. 3A is a diagram illustrating an example of options 4 displayed on terminal device 2 according to the embodiment. The example illustrated in FIG. 3A represents the case in which the questioning user has not yet asked a question about a product. For example, when the questioning user starts using answering system 100 with use of terminal device 2 and performs the login process, options 4 as illustrated in FIG. 3A are displayed.

In the example illustrated in FIG. 3A, options 4 (candidate answers 3) represent registered products. Here, there are three registered products that are associated with the questioning user (registered user), namely a convection microwave oven, a robot vacuum cleaner, and an air conditioner, and therefore, images and character strings (in this example, the names, product numbers, and dates of purchase of the registered products) that represent these products are displayed on display 22 as options 4. When the question-target product is one of these registered products, the questioning user selects one option 4 from among these options 4.

Note that in the example illustrated in FIG. 3A, display 22 also displays option 4A "select product category" in consideration of the case in which the questioning user's question-target product is a product other than the registered products. When the questioning user selects option 4A, display 22 displays a list of products as options in the same manner as the conventional automated response program. That is to say, in such a case, answering system 100 functions in the same manner as the conventional automated response program.

FIG. 3B is a diagram illustrating another example of options 4 displayed on terminal device 2 according to the embodiment. The example illustrated in FIG. 3B represents the case in which the questioning user has selected one option 4 from among a plurality of options 4 illustrated in FIG. 3A. Specifically, the example illustrated in FIG. 3B represents the case in which the questioning user has selected option 4 corresponding to the air conditioner.

In the example illustrated in FIG. 3B, options 4 (candidate answers 3) represent questions about the registered product. Here, since the registered product selected by the questioning user is the air conditioner, character strings representing questions about the air conditioner are displayed on display 22 as options 4. From these options 4, the questioning user selects option 4 that corresponds to the question related to an answer that the questioning user desires. Note that among options 4 displayed on display 22, options 4 with a greater number of times they have been selected may be preferentially displayed on display 22, based on the history of the questioning user's selections or all the questioning users' selections, for example.

FIG. 3C is a diagram illustrating yet another example of options 4 displayed on terminal device 2 according to the embodiment. The example illustrated in FIG. 3C represents the case in which the questioning user has selected one option 4 from among the plurality of options 4 illustrated in FIG. 3B. Specifically, the example illustrated in FIG. 3C represents the case in which the questioning user has selected option 4 that corresponds to a question about installation of the air conditioner.

In the example illustrated in FIG. 3C, options 4 (candidate answers 3) represent answers that are estimated as answers desired by the questioning user who is asking about the registered product. Here, since the questioning user has selected the question about the installation of the air conditioner, display 22 displays, as options 4, a character string representing an answer regarding the installation of the air conditioner and a character string representing an answer regarding the installation of the compressor unit of the air conditioner. From these options 4, the questioning user selects option 4 that corresponds to an answer which the questioning user desires.

Note that in the example illustrated in FIG. 3C, display 22 also displays option 4B that allows the questioning user to select "Yes" or "No" to the question "Did you find a solution to your question?", in consideration of the case in which the answer desired by the questioning user is not present. If the questioning user selects "Yes" in option 4B, it is determined that the answer desired by the user was present, and, for example, display 22 displays again options 4 illustrated in FIG. 3A to allow the questioning user to enter another question. On the other hand, if the questioning user selects "No" in option 4B, it is determined that the answer desired by the questioning user is not present. In such a case, for example, display 22 displays option 4 that presents frequently-asked-questions (FAQ) information narrowed down to by performing a search using a character string based on the questioning user's question-target product or a character string based on the content of the questioning user's question (for example, "air conditioner installation") on a predetermined website that includes product-related FAQ information other than the information stored in storage 16 of answering system 100. Also, for example, display 22 displays option 4 that presents guidance on how to seek advice by telephone, e-mail, etc., based on the registered user information, registered product information, product information on the question-target product of the questioning user, or the like.

Note that in each of FIG. 3A through FIG. 3C, text box 5 displayed at the bottom of display 22 is used for the questioning user to freely enter a character string indicating the content of a question. When a character string (question) is entered in text box 5, processor 14 generates one or more candidate answers 3 according to the question entered. Then, presenter 15 displays, on display 22 of terminal device 2, one or more candidate answers 3 generated by processor 14 as one or more options 4. In such a case, too, display 22 preferentially displays one or more options 4 (candidate answers 3) regarding one or more registered products corresponding to the questioning user (registered user).

For example, when a registered product corresponding to the questioning user (registered user) is an air conditioner and the questioning user enters a character string (question) "installation" in text box 5, processor 14 generates candidate answers 3 regarding home appliances for which question content related to the entered character string (question) is stored in storage 16. When candidate answers 3 generated include candidate answers 3 regarding the registered product, candidate answers 3 regarding the registered product are preferentially displayed on display 22 of terminal device 2. In such a case, display 22 of terminal device 2 displays options 4 (candidate answers 3) regarding the installation of the air conditioner as in the example illustrated in FIG. 3C. In addition, in such a case, the presentation of options 4 (candidate answers 3) as in the examples illustrated in FIG. 3A and FIG. 3B is omitted.

Note that although third and subsequent options 4 (candidate answer 3) are not illustrated here, third and subsequent options 4 (candidate answers 3) may be placed to the right of second option 4 (candidate answer 3), for example. In such a case, the questioning user can check third and subsequent options 4 (candidate answers 3) by scrolling through options 4 (candidate answers 3) from right to left.

Processor 14 may generate only candidate answers 3 regarding the air conditioner, which is a registered product. In such a case, display 22 of terminal device 2 displays only options 4 (candidate answers 3) regarding the installation of the air conditioner.

Furthermore, if a character string (question) is entered in text box 5 in the state in which the question-target product is selected, processor 14 and presenter 15 may perform the processing as described above, and display 22 may preferentially display options 4 (candidate answers 3) regarding the question-target product. For example, if the question-target product is an air conditioner, display 22 of terminal device 2 preferentially displays options 4 (candidate answers 3) regarding an air conditioner, regardless of the registered product information of the questioning user.

In addition, the case described here is an example case in which a character string (question) is entered in text box 5, but the same applies even when a character string (question) is entered by voice.

Storage 16 is a storage device that stores information (for example, computer programs) necessary for processor 14 to perform various functions. Storage 16 is implemented by, for example, a semiconductor memory, but any known means for electronic information storage can be used without any particular limitation. Storage 16 stores, for example, the registered user information and the registered product information for each registered user.

Data stored in storage 16 is shown in Tables 1 through 6 below. Note that "ID" in Tables 1 through 6 is an abbreviation for identifier. As illustrated in Table 1 below, storage 16 stores data in which "user ID", "product category ID", "product individual ID", "date of purchase", "date and time of registration", and "type of registration" are associated with one another. The data illustrated in Table 1 is referred to by processor 14 when, for example, identifying a registered product corresponding to the registered user. Note that in Table 1, "full registration" indicates that the product has been registered by the user (registered user) performing the registration process, whereas "temporary registration" indicates that the product has been temporarily registered by answering system 100 regardless of the user's intention.

**[Table 1]**

| User ID | Product Category ID | Product Individual ID | Date of Purchase | Date and Time of Registration | Type of Registration |
|---|---|---|---|---|---|
| User1 | C10 | 0000C 10 | 2020/02/01 | 2020/02/01 00:00:00 | Full Registration |
| User1 | C11 | - | - | 2020/02/05 23:55:05 | Provisional Registration |
| ... | ... | ... | ... | ... | ... |

As illustrated in Table 2 below, storage 16 also stores data in which "product category ID", "type of product", and "question category ID" are associated with one another. The data illustrated in Table 2 is referred to by processor 14 when, for example, generating candidate answer 3 corresponding to a registered product.

**[Table 2]**

| Product Category ID | Type of Product | Question Category ID |
|---|---|---|
| C10 | Front loader washing machine | Q10 |
| C11 | Top loader washing machine | Q11 |
| ... | ... | ... |

As illustrated in Table 3 below, storage 16 also stores data in which "question category ID", "question content ID", and "question content - character string" are associated with one another. The data illustrated in Table 3 is referred to by processor 14 when, for example, generating candidate answer 3 corresponding to a registered product.

**[Table 3]**

| Question Category ID | Question Content ID | Question Content - Character String |
|---|---|---|
| Q10 | 001Q10 | Abnormal sound |
| Q10 | 002Q10 | Water is leaking |
| ... | ... | ... |

As illustrated in Table 4 below, storage 16 also stores data in which "answer ID", "answer - character string", and "product category ID" are associated with one another. The data illustrated in Table 4 is referred to by processor 14 when, for example, generating candidate answer 3 corresponding to a registered product.

**[Table 4]**

| Answer ID | Answer - Character String | Product Category ID |
|---|---|---|
| A00001 | When you hear abnormal sound from front loader washing machine... | Q10 |
| A00002 | When water leaks from front loader washing machine... | Q10 |
| A00003 | When water leaks from top loader washing machine... | Q11 |
| ... | ... | ... |

As illustrated in Table 5 below, storage 16 also stores data in which "user ID", "product category ID", and "date and time of question" are associated with one another. The data illustrated in Table 5 is referred to by processor 14 when, for example, provisionally registering a non-registered product as a registered product.

**[Table 5]**

| User ID | Product Category ID | Date and Time of Question |
|---|---|---|
| User1 | C11 | 2020/02/05 23:55:00 |
| ... | ... | ... |

As illustrated in Table 6 below, storage 16 also stores data in which "product individual ID", "error ID", and "date and time of occurrence of error" are associated with one another. The data illustrated in Table 6 is referred to by processor 14 when, for example, checking whether or not an error is occurring in a registered product.

**[Table 6]**

| Product Individual ID | Error ID | Date and Time of Occurrence of Error |
|---|---|---|
| 0000C10 | E01 | 2020/02/05 23:00:00 |
| ... | ... | ... |

### [2. Presentation Examples]

Hereinafter, examples of presentation of options 4 by presenter 15 will be provided as Presentation Examples 1 through 8. Presentation Examples 1 through 5 are examples of presentation which may be carried out when there is more than one registered product corresponding to a questioning user (registered user). Presentation Examples 6 through 8 are examples of presentation which may be carried out regardless of the number of registered products corresponding to a questioning user (registered user). Unless otherwise specified, all of Presentation Examples 1 through 8 are examples of display presented by display 22 when a questioning user starts using answering system 100 and performs the login process.

First, Presentation Examples 1 through 5 will be described. In the embodiment, processor 14 assigns a degree of priority to the registered product information. Then, presenter 15 presents candidate answer 3 as option 4, based on the degree of priority assigned by processor 14. When the degree of priority is higher, option 4 (candidate answer 3) is displayed at a position that is easier for the questioning user to see on display 22 of terminal device 2. In the embodiment, the higher the degree of priority is, the higher the position of option 4 is on display 22 of terminal device 2.

Note that presenter 15 need not present candidate answers 3 regarding all registered products to the questioning user as options 4. For example, presenter 15 may present, to the questioning user as options 4, only candidate answers 3 regarding registered products with a degree of priority higher than or equal to a predetermined degree among a plurality of registered products.

In Presentation Example 1, processor 14 (in processing ST3) assigns a degree of priority, based on the date of purchase of a registered product indicated in the registered product information. For example, processor 14 assigns a degree of priority to each registered product in a manner that a registered product with a more recent date of purchase is given a higher degree of priority. In such a case, display 22 of terminal device 2 displays message 6 prompting the questioning user to select option 4 or enter a question freely (see FIG. 3A), and also displays, at higher positions, options 4 (candidate answers 3) regarding registered products with more recent dates of purchase.

In the example illustrated in FIG. 3A, registered products corresponding to the questioning user (registered user) are a convection microwave oven, a robot vacuum cleaner, and an air conditioner, and the date of purchase of the convection microwave oven is the most recent and the date of purchase of the air conditioner is the least recent. Therefore, in the example illustrated in FIG. 3A, display 22 of terminal device 2 displays, starting from a high position on display 22, options 4 (candidate answers 3) regarding the convection microwave oven, the robot vacuum cleaner, and the air conditioner in the stated order.

Here, at the point in time when, for example, the questioning user starts using answering system 100, display 22 of terminal device 2 may display, as illustrated in FIG. 4, options 4 for asking the questioning user whether the question is about a product before purchase. FIG. 4 is an explanatory diagram of Presentation Example 1 of answering system 100 according to the embodiment. In the example illustrated in FIG. 4, display 22 of terminal device 2 displays message 6A prompting the questioning user to select option 4 or enter a question freely, and also displays option 4C, "Frequently Asked Questions" and option 4D, "Product Comparison Website".

Option 4C is likely to be selected when the questioning user has no intention to purchase a new product and has a question about a product that the questioning user already owns. In other words, option 4C is likely to be selected when the question is not about a product before purchase. On the other hand, option 4D is likely to be selected when the questioning user has an intension to purchase a new product. In other words, option 4D is likely to be selected when the question is about a product before purchase.

The manner in which processor 14 assigns a degree of priority to each registered product when the questioning user selects option 4C may be different from the manner in which processor 14 assigns a degree of priority to each registered product when the questioning user selects option 4D.

Specifically, when the input received by input receiver 12 (receiving ST5) is a question about a product before purchase (that is, when the questioning user selects option 4D), processor 14 (in processing ST3) assigns higher degrees of priority to registered products with less recent dates of purchase. This is because older products are considered more likely to be replaced. In such a case, options 4 (candidate answers 3) regarding the registered products with less recent dates of purchase are displayed at higher positions on display 22 of terminal device 2.

FIG. 5A is an explanatory diagram of Presentation Example 2 of answering system 100 according to the embodiment. In the example illustrated in FIG. 5A, display 22 of terminal device 2 displays, starting from a high position on display 22, options 4 (candidate answers 3) regarding the air conditioner, the robot vacuum cleaner, and the convection microwave oven according to the order of the date of purchase, starting from the least recent date of purchase.

When the input received by input receiver 12 (receiving ST5) is not a question about a product before purchase (that is, when the questioning user selects option 4C), processor 14 (in processing ST3) assigns a higher degree of priority to a registered product with a more recent date of purchase. This is because the newer the product is, the more likely it is that the questioning user has not yet understood how to use the product and has a question to ask about the product. In such a case, options 4 (candidate answers 3) regarding registered products with more recent dates of purchase are displayed at higher positions on display 22 of terminal device 2.

FIG. 5B is an explanatory diagram of Presentation Example 2 of answering system 100 according to the embodiment. In the example illustrated in FIG. 5B, display 22 of terminal device 2 displays, starting from a high position on display 22, options 4 (candidate answers 3) regarding the convection microwave oven, the robot vacuum cleaner, and the air conditioner according to the order of the date of purchase, starting from the most recent date of purchase.

In Presentation Example 2, processor 14 (in processing ST3) assigns a degree of priority, based on the date of registration of a registered product indicated in the registered product information. For example, processor 14 assigns a degree of priority to each registered product in a manner that a registered product with a more recent date of registration is given a higher degree of priority. In such a case, options 4 (candidate answers 3) regarding registered products with more recent dates of registration are displayed at higher positions on display 22 of terminal device 2.

In Presentation Example 3, first obtainer 11 (in first obtaining ST1) further obtains error information on a registered product indicated in the registered product information. Processor 14 (in processing ST3) increases the degree of priority of registered product information that corresponds to the error information. For example, when first obtainer 11 communicates with a registered product and obtains state information (error information) indicating that an error is occurring in the registered product, processor 14 assigns the highest degree of priority to that registered product. In such a case, option 4 (candidate answer 3) regarding the registered product in which an error is occurring is displayed at the highest position on display 22 of terminal device 2.

FIG. 6A is an explanatory diagram of Presentation Example 3 of answering system 100 according to the embodiment. In the example illustrated in FIG. 6A, display 22 of terminal device 2 displays message 6B that notifies the questioning user that an error is occurring in the registered product, and also displays option 4 (candidate answer 3) regarding the washing machine (registered product) in which the error is occurring. Note that in the example illustrated in FIG. 6A, options 4 (candidate answers 3) regarding other registered products are not illustrated, but options 4 regarding other registered products are displayed below option 4 regarding the front loader washing machine in which the error is occurring.

Here, in the example illustrated in FIG. 6A, display 22 of terminal device 2 further displays icon 7 (error information) which says "Error" to indicate that an error is occurring in the front loader washing machine, in addition to option 4 regarding the front loader washing machine in which the error is occurring. That is to say, when an error occurs in a registered product, processor 14 (in processing ST3) generates error information indicating that an error is occurring in the registered product. Then, presenter 15 (in presenting ST4) further presents, as option 4, the error information generated by processor 14 (processing ST3). Note that although only the information indicating "Error" is displayed as icon 7 (error information) in this example, other information such as an error ID or an overview of the error may also be displayed.

Then, when input receiver 12 (receiving ST5) receives an input to select the error information, processor 14 (in processing ST3) generates error-handling answer 30 for solving the error. Specifically, processor 14 performs processing to search for error-handling answer 30, based on a query that combines, for example, the name of the registered product included in the error information and the error ID included in the error information. Then, presenter 15 (in presenting ST4) presents error-handling answer 30 generated by processor 14 (processing ST3). Note that icon 7 (error information) may be deleted after a lapse of a predetermined period of time without operation by the questioning user, or may be deletable by operation by the questioning user, for example.

FIG. 6B is an explanatory diagram of Presentation Example 3 of answering system 100 according to the embodiment. In the example illustrated in FIG. 6B, display 22 of terminal device 2 displays query 8 which was used in the search performed for generating error-handling answer 30, and also displays error-handling answer 30 that may solve the error occurring in the front loader washing machine (registered product). By selecting error-handling answer 30, the questioning user can find out how the error in the front loader washing machine may be solved. Note that query 8 need not be displayed on display 22.

In Presentation Example 4, processor 14 (in processing ST3) assigns a degree of priority, based on the usage history of the registered product indicated in the registered product information. The usage history is, for example, the number of uses of each registered product during a predetermined period of time (for example, the last one week). The usage history can be obtained as the registered product information by first obtainer 11 communicating with each registered product. For example, processor 14 assigns a degree of priority to each registered product in a manner that a registered product with a greater number of uses in a predetermined period of time is given a higher degree of priority. In such a case, option 4 (candidate answer 3) regarding a registered product with a greater number of uses in a predetermined period of time is displayed at a higher position on display 22 of terminal device 2.

FIG. 7 is an explanatory diagram of Presentation Example 4 of answering system 100 according to the embodiment. The example illustrated in FIG. 7 is a graph showing the number of uses of each of a plurality of registered products (in this case, three registered products, namely "product 1", "product 2", and "product 3") during a predetermined period of time. In the example illustrated in FIG. 7, "product 2" has the greatest number of uses in the predetermined period of time, and "product 3" has the least number of uses in the predetermined period of time. Therefore, in the example illustrated in FIG. 7, display 22 of terminal device 2 displays, starting from a high position on display 22, options 4 (candidate answers 3) regarding "product 2", "product 1", and "product 3" in the stated order.

In Presentation Example 5, processor 14 (in processing ST3) assigns a degree of priority, based on the frequency of questions for each of the plurality of registered products. The frequency of questions here may be the frequency of questions asked by one specific questioning user or may be the frequency of questions asked by a large number of questioning users. For example, processor 14 assigns a degree of priority to each registered product in a manner that a registered product with a higher frequency of questions is given a higher degree of priority. In such a case, option 4 (candidate answer 3) regarding a registered product with a higher frequency of questions is displayed at a higher position on display 22 of terminal device 2.

Note that questions according to Presentation Example 5 may include, for example, questions that the questioning user (registered user) has asked the customer support center or access information provided on a predetermined website on which product-related FAQ information is posted, in addition to the inputs received by input receiver 12 from the questioning user (registered user). In other words, questions may include not only questions obtained by answering system 100, but also, for example, questions obtained by a system other than answering system 100 or access information provided on a website.

FIG. 8A through FIG. 8C are explanatory diagrams of Presentation Example 5 of answering system 100 according to the embodiment. The example illustrated in FIG. 8A is a graph showing the correlation between the number of days elapsed from the date of registration of a given registered product and the number of questions about the given registered product. The example illustrated in FIG. 8B is a graph showing the correlation between the number of days elapsed from the date of purchase of a given registered product and the number of questions about the given registered product. FIG. 8C is a graph showing the correlation between the season and the number of questions about a given registered product. In all of the examples illustrated in FIG. 8A through FIG. 8C, processor 14 increases the degree of priority of a given registered product during a time period in which the number of questions about the given registered product is high.

Here, processor 14 may assign a degree of priority to each registered product by combining Presentation Examples 3 through 5. In such a case, processor 14 assigns a degree of priority to each registered product by calculating a score for each presentation example and taking into account the weight (importance) of each presentation example.

Hereinafter, an example of an algorithm used for assigning a degree of priority will be specifically described. Needless to say, the algorithm described below is one example, and a degree of priority may be assigned according to other algorithms. Here, processor 14 calculates a provisional score for each of first through fifth indicators regarding a given registered product, and determines, as the score of the given registered product, a sum of values obtained by multiplying the calculated provisional score by weighting factors determined for the respective indicators. Then, after calculating the score for each of the plurality of registered products, processor 14 assigns a degree of priority to each registered product in a manner that a registered product with a higher score is given a higher degree of priority.

The first indicator is an indicator regarding an error that has occurred in a registered product, and is an indicator corresponding to Presentation Example 3. Provisional score S1(X) of the first indicator is expressed by Equation (1) below. Note that in Equation (1), N1(X) represents the number of times an error has occurred in a given registered product "X" among n registered products (where n is a natural number) during a predetermined period of time (for example, the last three days).
[Math. 1] $S 1 \left(X\right) = \frac{N 1 \left(X\right)}{N 1 \left(1\right) + ⋯ + N 1 \left(n\right)}$

The second indicator is an indicator regarding the number of uses of a registered product, and corresponds to Presentation Example 4. Provisional score S2(X) of the second indicator is expressed by Equation (2) below. Note that in Equation (2), N2(X) represents the number of times that a given registered product "X" among n registered products was used in a predetermined period of time (for example, the last one week).
[Math. 2] $S 2 \left(X\right) = \frac{N 2 \left(X\right)}{N 2 \left(1\right) + ⋯ + N 2 \left(n\right)}$

The third indicator is an indicator regarding the date of registration of a registered product and the number of questions asked about the registered product, and is an indicator corresponding to Presentation Example 5. Provisional score S3(X) of the third indicator is expressed by Equation (3) below. Note that in Equation (3), N3(X) represents, regarding a given registered product "X" among n registered products, a value obtained by normalizing, using the number of registrations of the given registered product, the number of questions corresponding to the number of days elapsed from the date of registration to the time of calculation of the third indicator.
[Math. 3] $S 3 \left(X\right) = \frac{N 3 \left(X\right)}{N 3 \left(1\right) + ⋯ + N 3 \left(n\right)}$

The fourth indicator is an indicator regarding the date of purchase of a registered product and the number of questions asked about the registered product, and is an indicator corresponding to Presentation Example 5. Provisional score S4(X) of the fourth indicator is expressed by Equation (4) below. Note that in Equation (4), N4(X) represents, regarding a given registered product "X" among n registered products, a value obtained by normalizing, using the number of registrations of the given registered product, the number of questions corresponding to the number of days elapsed from the date of purchase to the time of calculation of the fourth indicator.
[Math. 4] $S 4 \left(X\right) = \frac{N 4 \left(X\right)}{N 4 \left(1\right) + ⋯ + N 4 \left(n\right)}$

The fifth indicator is an indicator regarding the season and the number of questions asked about a registered product, and is an indicator corresponding to Presentation Example 5. Provisional score S5(X) of the fifth indicator is expressed by Equation (5) below. Note that in Equation (5), N5(X) represents, regarding a given registered product "X" among n registered products, a value obtained by normalizing, using the number of registrations of the given registered product, the number of questions corresponding to the time of calculation of the fifth indicator.
[Math. 5] $S 5 \left(X\right) = \frac{N 5 \left(X\right)}{N 5 \left(1\right) + ⋯ + N 5 \left(n\right)}$

The weighting factor of each of the first through fifth indicators can be set as appropriate based on the importance of each indicator. For example, the weighting factor of the first indicator may be set to the highest value, the weighting factors of the fourth and fifth indicators may be set to the next highest equivalent values, and the weighting factors of the second and third indicators may be set to the smallest equivalent values. The reason for the above settings is that the first indicator is considered more important in terms of urgency, the third indicator is considered ambiguous compared to the fourth indicator as the basis for the user to ask a question, and the second indicator is considered weak as the basis for the user to ask a question. Needless to say, the above determination of the weighting factors of the respective indicators is a mere example.

In Presentation Example 6, first obtainer 11 (in first obtaining ST1) further obtains a history of questions asked by a registered user about a non-registered product that is not registered. The history of questions may include, for example, questions that the questioning user (registered user) has asked the customer support center, in addition to the inputs received by input receiver 12 from the questioning user (registered user). In other words, the history of questions may include not only the history that answering system 100 has automatically compiled, but also a history that a system other than answering system 100 has compiled.

Next, processor 14 (in processing ST3) provisionally registers the non-registered product as a registered product, based on the history obtained by first obtainer 11 (first obtaining ST1). For example, when the number of questions asked about a given non-registered product exceeds a predetermined number, processor 14 provisionally registers the non-registered product as a registered product. Thus, processor 14 generates one or more candidate answers 3 regarding the provisionally-registered non-registered product. Then, presenter 15 (in presenting ST4) further presents, as one or more options 4, one or more candidate answers 3 generated by processor 14 (in processing ST3) regarding the non-registered product.

FIG. 9A is an explanatory diagram of Presentation Example 6 of answering system 100 according to the embodiment. In the example illustrated in FIG. 9A, registered products corresponding to the questioning user (registered user) are the convection microwave oven and the robot vacuum cleaner. Although the air conditioner is a non-registered product, the air conditioner is provisionally registered because the number of times that the registered user has asked a question about the air conditioner has exceeded a predetermined number. In such a case, display 22 of terminal device 2 displays, starting from a high position on display 22, options 4 (candidate answers 3) regarding the fully-registered convection microwave oven and robot vacuum cleaner and option 4 (candidate answer 3) regarding the provisionally-registered air conditioner in the stated order.

Here, processor 14 (in processing ST3) may generate guidance information for guiding the questioning user to a process for registration of the non-registered product. Then, presenter 15 (in presenting ST4) may further present, as option 4, the guidance information generated by processor 14 (processing ST3). FIG. 9B is an explanatory diagram of Presentation Example 6 of answering system 100 according to the embodiment. In the example illustrated in FIG. 9B, display 22 of terminal device 2 further displays, in addition to option 4 regarding the provisionally-registered air conditioner, icon 7A (guidance information) for full registration of the air conditioner.

Then, processor 14 (in processing ST3) instructs presenter 15 to present, for example, registration screen P1 as illustrated in FIG. 2 to the questioning user when input receiver 12 (input reception ST5) receives an input to select the guidance information. Registration screen P1 for the full registration of the air conditioner is then displayed on display 22 of terminal device 2. This allows the questioning user to perform the full registration process for the provisionally-registered air conditioner. Note that whether or not the questioning user performs the full registration is optional. The guidance information displayed as option 4 may be deleted when the full registration of the provisionally-registered product is completed, may be deleted after a lapse of a predetermined period of time without operation by the questioning user, or may be deletable by operation by the questioning user, for example.

Furthermore, even when there is no registered product corresponding to the questioning user, processor 14 (in processing ST3) may generate the guidance information for guiding the questioning user to the process for registration of a non-registered product. Presenter 15 (in presenting ST4) then presents, as option 4, the guidance information generated by processor 14 (processing ST3). Then, processor 14 (in processing ST3) instructs presenter 15 to present, for example, registration screen P1 as illustrated in FIG. 2 to the questioning user when input receiver 12 (input reception ST5) receives an input to select the guidance information. Registration screen P1 for the registration of a product owned by the questioning user is then displayed on display 22 of terminal device 2.

Note that whether or not the questioning user registers a product is optional. Also, the guidance information displayed as option 4 may be deleted when the registration of a product is completed, may be deleted after a lapse of a predetermined period of time without operation by the questioning user, or may be deletable by operation by the questioning user, for example.

In Presentation Example 7, presenter 15 (in processing ST3) does not present candidate answer 3 regarding a registered product when an answer regarding the registered product information is not present. For example, no answer to the question may be present if the registered product is a new product that has been on the market for a short period of time, because information about the new product has not accumulated. In such a case, presenter 15, for example, causes display 22 of terminal device 2 to display option 4 regarding the registered product in a manner that such option 4 is unselectable by the questioning user, or causes display 22 not to display such option 4.

FIG. 10 is an explanatory diagram of Presentation Example 7 of answering system 100 according to the embodiment. In the example illustrated in FIG. 10, registered products corresponding to the questioning user (registered user) are a convection microwave oven, a robot vacuum cleaner, and an air conditioner, but an answer to the question is not present for the robot vacuum cleaner and the air conditioner. Therefore, in the example illustrated in FIG. 10, options 4 for the robot vacuum cleaner and the air conditioner are grayed out and are unselectable.

In Presentation Example 8, processor 14 (in processing ST3) generates reason information indicating the reason for generating candidate answer 3. For example, in the case where processor 14 has generated candidate answers 3 by assigning a degree of priority to each of a plurality of registered products, processor 14 generates reason information indicating the reason for assigning the degree of priority. Then, presenter 15 (in presenting ST4) further presents the reason information.

FIG. 11A and FIG. 11B are explanatory diagrams of Presentation Example 8 of answering system 100 according to the embodiment. FIG. 11A represents the case in which processor 14 assigns a degree of priority to each registered product based on the current season (in this case, winter). In the example illustrated in FIG. 11A, option 4 (candidate answer 3) regarding the convection microwave oven with a large number of questions (that is, a high frequency of questions) in winter is displayed at the highest position on display 22 of terminal device 2. In the example illustrated in FIG. 11A, message 6C recommending new ways of using the convection microwave oven is further displayed indirectly as the reason information.

FIG. 11B illustrates the case in which processor 14 assigns a degree of priority to each registered product based on the number of days elapsed from the date of purchase. In the example illustrated in FIG. 11B, option 4 (candidate answer 3) regarding the convection microwave oven having the least number of days elapsed from the date of purchase to the present is displayed at the highest position on display 22 of terminal device 2. In the example illustrated in FIG. 11B, message 6D which prompts the questioning user to ask about the convection microwave oven that has been recently purchased, is further displayed indirectly as the reason information.

Note that although presenter 15 indirectly presents the reason information indicating the reason for assigning a degree of priority to each registered product as described above, presenter 15 may directly present the reason information. For example, in the case where processor 14 has assigned a degree of priority to each registered product based on the current season (in this case, winter), presenter 15 may display, on display 22 of terminal device 2, a message directly indicating that candidate answers 3 are presented based on the fact that the current season is winter.

### [3. Operation]

Hereinafter, operation of answering system 100 having the above-described configuration will be described with reference to FIG. 12. FIG. 12 is a flowchart illustrating an operation example of answering system 100 according to the embodiment. The following is a description of an example of operation according to the selection method in which answering system 100 presents options 4 (candidate answers 3) to the questioning user and the questioning user selects one of options 4 presented. In the following description, it is assumed that the questioning user (registered user) uses terminal device 2.

First, when the registered user performs the registration process using terminal device 2, first obtainer 11 obtains registered user information and registered product information (S1). This process S1 corresponds to first obtaining ST1 included in the answering method. The registered user information and the registered product information obtained by first obtainer 11 are stored in storage 16. For example, as illustrated in Table 1, the "user ID" which serves as the registered user information is associated with the "product category ID", the "product individual ID", the "date of purchase", the "date and time of registration", and the "type of registration" which serve as the registered product information, and these items of information are stored in storage 16.

Next, when the questioning user starts using answering system 100 using terminal device 2 and performs the login process, second obtainer 13 obtains questioning user information (S2). This process S2 corresponds to second obtaining ST2 included in the answering method. Then, processor 14 compares the questioning user with the registered user by referring to the registered user information stored in storage 16 (S3). Specifically, processor 14 compares the "user ID" stored as the registered user information with the "user ID" serving as the questioning user information.

When the questioning user and the registered user do not match (No in S3), answering system 100 functions in the same manner as the conventional automated response program (answering system). On the other hand, when the questioning user and the registered user match, processor 14 generates one or more candidate answers 3 regarding one or more registered products corresponding to the questioning user (registered user) (S4). These processes S3 and S4 correspond to processing ST3 included in the answering method. For example, processor 14 generates candidate answer 3 representing a registered product, by referring to the "product category ID" corresponding to the "product individual ID" as illustrated in Table 1 and the "type of product" corresponding to the "product category ID" as illustrated in Table 2. Note that, as illustrated in Table 6, when an "error ID" corresponding to the "product individual ID" is present, that is, when an error is occurring in a registered product, processor 14 further generates error information.

Presenter 15 then presents one or more candidate answers 3 generated by processor 14 to the questioning user as one or more options 4 (S5). This process S5 corresponds to presenting ST4 included in the answering method. Specifically, presenter 15 transmits a signal including option 4 to terminal device 2 to cause display 22 of terminal device 2 to display option 4.

Next, when the questioning user performs an operation to select option 4 using terminal device 2, input receiver 12 receives an input related to a question about a product from the questioning user (S6). This process S6 corresponds to receiving ST5 included in the answering method.

Here, when the input related to a question is an input to select the final answer, that is, when the questioning has come to the end (Yes in S7), the operation of answering system 100 ends. On the other hand, when the input related to a question is not an input to select the final answer, that is, when the questioning has not come to the end (No in S7), the above processes S4 through S6 are repeated.

For example, when input receiver 12 receives an input to select option 4 corresponding to a registered product, processor 14 generates, in process S4, one or more candidate answers 3 representing questions about the registered product. Specifically, processor 14 generates one or more candidate answers 3 by referring to the "type of product" and the "question category ID" that correspond to the selected registered product as illustrated in Table 2 and the "question content ID" and the "question content - character string" that correspond to the "question category ID" as illustrated in Table 3.

Furthermore, for example, when input receiver 12 receives an input to select option 4 representing a question about the registered product, processor 14 generates, in process S4, one or more candidate answers 3 estimated to be desired by the questioning user regarding the registered product. Specifically, processor 14 generates one or more candidate answers 3 by referring to the "answer - character string" as illustrated in Table 4.

### [4. Advantageous Effects etc.]

Hereinafter, advantages of answering system 100 according to the embodiment will be described.

As described earlier, the conventional automated response program (answering system) has a problem that the user may have to spend time and effort to obtain an answer regarding a question-target product, whether the method used is the selection method or the free input method.

In contrast, with answering system 100 according to the embodiment, when the questioning user is a registered user, one or more candidate answers 3 regarding one or more registered products corresponding to the registered user are presented to the questioning user as one or more options 4 selectable by the questioning user. In other words, whether the method used is the selection method or the free input method, answering system 100 according to the embodiment presents one or more candidate answers 3 regarding one or more registered products each likely to be selected as a question-target product. Therefore, unlike the conventional automated response program (answering system), there is no need for the questioning user to find an option (candidate answer) regarding the question-target product from among a large number of products including both registered and non-registered products.

As described above, answering system 100 according to the embodiment has an advantage over the conventional automated response program (answering system) in that answering system 100 facilitates reduction of time and effort that the user (questioning user) spends to obtain an answer regarding a question-target product.

### [5. Variations]

An embodiment has been described above to illustrate an example of the technology disclosed in the present application. However, the technology according to the present disclosure is not limited to the above embodiment, and can be applied to embodiments achieved by making modifications, substitutions, additions, omissions, etc. on the above embodiment as appropriate. In addition, it is also possible to create a new embodiment by combining the constituent elements described in the above embodiment.

In view of the above, variations of the above embodiment will be described below.

In Presentation Example 3 according to the above embodiment, when an error occurs in a registered product while the questioning user is using answering system 100, option 4 (candidate answer 3) regarding the registered product is presented to the questioning user with a higher degree of priority, but the present disclosure is not limited to this. For example, processor 14 of answering system 100 may generate error information when an error occurs in a registered product, even if the user has not started using answering system 100. Presenter 15 may then present the error information generated by processor 14 to the user as option 4.

FIG. 13 is a diagram illustrating an example of a screen displayed on terminal device 2 according to a variation of the embodiment. In the example illustrated in FIG. 13, option 4E indicating error information is displayed on display 22 of terminal device 2 by a push notification. When the user sees terminal device 2 and selects option 4E, processor 14 generates error-handling answer 30. Presenter 15 then presents error-handling answer 30 to the user by displaying error-handling answer 30 on display 22 of terminal device 2.

In the embodiment, answering system 100 does not include terminal device 2, but terminal device 2 may be a constituent element of answering system 100. In addition, in the embodiment, answering system 100 is included in server 1, but the present disclosure is not limited to this. For example, answering system 100 may be included in terminal device 2.

For example, answering system 100 in the above embodiment is implemented as a single device, but may be implemented by plural devices. In the case where answering system 100 is implemented by plural devices, the constituent elements of answering system 100 may be allocated to the plural devices in any manner. In other words, the present disclosure may be implemented by cloud computing or may be implemented by edge computing.

For example, in the above embodiment, all or part of the constituent elements of answering system 100 according to the present disclosure may be configured in the form of an exclusive hardware product, or may be implemented by executing a software program suitable for each constituent element. Each of the constituent elements may be implemented by means of a program executing unit, such as a central processing unit (CPU) or a processor, reading and executing a software program recorded on a recording medium such as a hard disk drive (HDD) or semiconductor memory.

The constituent elements of answering system 100 according to the present disclosure may be configured in the form of one or more electronic circuits. Each of the one or more electronic circuits may be a general-purpose circuit or may be an exclusive circuit.

The one or more electronic circuits may include, for example, a semiconductor device, an integrated circuit (IC), or a large-scale integration (LSI) circuit. The IC or LSI may be integrated into a single chip or may be integrated into plural chips. Although the names used here are IC and LSI, the terminology varies depending on the degree of integration, and it may be referred to as a system LSI circuit, a very large-scale integration (VLSI) circuit, or an ultra large-scale integration (ULSI) circuit. Field programmable gate arrays (FPGAs), which are programmed after the LSI circuit is manufactured, can be used for the same purpose.

The general or specific aspects of the present disclosure may be implemented by a system, a device, a method, an integrated circuit, or a computer program. Alternatively, they may be implemented by a non-transitory computer-readable recording medium such as an optical disk, an HDD or semiconductor memory in which the computer program is stored. For example, the present disclosure may be implemented as a program for causing a computer to execute the control method according to the above embodiment. The program may be recorded on a non-transitory computer-readable recording medium such as CD-ROM or may be distributed through a communication channel such as the Internet.

An embodiment has been described above to illustrate an example of the technology according to the present disclosure. The accompanying drawings and the detailed description have been provided for this purpose.

Therefore, the constituent elements described in the accompanying drawings and the detailed description may include not only constituent elements that are essential for the problem solving but also constituent elements that are not essential for the problem solving, in order to illustrate an example of the above technology. As such, these non-essential constituent elements should not be deemed essential due to the mere fact that they are included in the accompanying drawings and the detailed description.

The above-described embodiment is intended to illustrate an example of the technology according to the present disclosure, and thus, various changes, substitutions, additions, omissions, etc. can be made within the scope of the claims or their equivalents.

### [Summary]

As described above, answering system 100 according to the embodiment includes first obtainer 11, input receiver 12, second obtainer 13, processor 14, and presenter 15. First obtainer 11 obtains registered user information and registered product information on the registered user information. Input receiver 12 receives an input related to a question from a questioning user. Second obtainer 13 obtains questioning user information on the questioning user. Processor 14 generates candidate answer 3 regarding the registered product information in response to the input related to the question, when the registered user information that matches the questioning user information obtained by second obtainer 13 is present. Presenter 15 presents candidate answer 3 generated by processor 14.

Also, answering system 100 according to the embodiment includes first obtainer 11, second obtainer 13, processor 14, and presenter 15. First obtainer 11 obtains registered user information and registered product information on the registered user information. Second obtainer 13 obtains questioning user information on a questioning user. Processor 14 generates candidate answer 3 regarding the registered product information when the registered user information that matches the questioning user information obtained by second obtainer 13 is present. Presenter 15 presents candidate answer 3 generated by processor 14.

This produces an advantage of facilitating reduction of time and effort that the user (questioning user) spends to obtain an answer regarding the question-target product, because there is no need for the questioning user to find option 4 (candidate answer 3) regarding the question-target product from among a large number of products including both registered and non-registered products.

Also, for example, processor 14 assigns a degree of priority to the registered product information. Presenter 15 presents candidate answer 3 as option 4, based on the degree of priority assigned by processor 14.

This produces an advantage that it is further easier for the user (questioning user) to find candidate answer 3 regarding a registered product that is the likely question-target product.

Also, for example, processor 14 assigns a degree of priority, based on the date of purchase of a registered product indicated in the registered product information.

This produces an advantage that it is further easier for the user (questioning user) to find candidate answer 3 regarding a registered product that is the likely question-target product.

Also, for example, processor 14 assigns a degree of priority, based on the date of registration indicated in the registered product information.

This produces an advantage that it is further easier for the user (questioning user) to find candidate answer 3 regarding a registered product that is the likely question-target product.

Also, for example, first obtainer 11 further obtains error information on a registered product indicated in the registered product information. Processor 14 increases the degree of priority of the registered product information that corresponds to the error information.

According to this, it is further easier for the user (questioning user) to find candidate answer 3 regarding the registered product in which an error that is likely to need urgent attention is occurring, thus producing an advantage of facilitating reduction of time and effort that the user (questioning user) spends to solve the error.

Also, for example, processor 14 assigns a degree of priority, based on the usage history of a registered product indicated in the registered product information.

This produces an advantage that it is further easier for the user (questioning user) to find candidate answer 3 regarding a registered product that is the likely question-target product.

Also, for example, first obtainer 11 further obtains a history of questions asked by the registered user about a non-registered product that is not registered. Processor 14 provisionally registers the non-registered product as a registered product, based on the history obtained by first obtainer 11.

This produces an advantage of facilitating reduction of time and effort spent by the user to obtain an answer regarding the question-target product even when a non-registered product is the question-target product.

Also, for example, processor 14 generates guidance information for guiding the questioning user to a process for registration of a non-registered product. Presenter 15 further presents, as option 4, the guidance information generated by processor 14.

This produces an advantage of facilitating an increase in the likelihood that the user (questioning user) will register the non-registered product.

Also, for example, presenter 15 does not present candidate answer 3 regarding the registered product information when an answer regarding the registered product information is not present.

This produces an advantage of facilitating inhibition of the user (questioning user) from spending unnecessary time and effort trying to find an answer even though an answer to the question is not available.

Also, for example, processor 14 generates reason information indicating a reason for generating candidate answer 3. Presenter 15 further presents the reason information.

This produces an advantage that the user (questioning user) is more likely to accept presented options 4 (candidate answers 3) as reasonable.

Terminal device 2 according to the embodiment includes communicator 21 and display 22. Communicator 21 communicates with answering system 100. When communicator 21 receives candidate answer 3 presented by presenter 15 of answering system 100, display 22 displays candidate answer 3 received.

This produces an advantage of facilitating reduction of time and effort that the user (questioning user) spends to obtain an answer regarding the question-target product, because there is no need for the questioning user to find option 4 (candidate answer 3) regarding the question-target product from among a large number of products including both registered and non-registered products.

Also, an answering method according to the embodiment includes first obtaining ST1, receiving ST5, second obtaining ST2, processing ST3, and presenting ST4. In first obtaining ST1, registered user information and registered product information on the registered user information are obtained. In receiving ST5, an input related to a question from a questioning user is received. In second obtaining ST2, questioning user information on the questioning user is obtained. In processing ST3, candidate answer 3 regarding the registered product information is generated in response to the input related to the question, when the registered user information that matches the questioning user information obtained in second obtaining ST2 is present. In presenting ST4, candidate answer 3 generated in processing ST3 is presented.

Also, an answering method according to the embodiment includes first obtaining ST1, second obtaining ST2, processing ST3, and presenting ST4. In first obtaining ST1, registered user information and registered product information on the registered user information are obtained. In second obtaining ST2, questioning user information on the questioning user is obtained. In processing ST3, candidate answer 3 regarding the registered product information is generated when the registered user information that matches the questioning user information obtained in second obtaining ST2 is present. In presenting ST4, candidate answer 3 generated in processing ST3 is presented.

This produces an advantage of facilitating reduction of time and effort that the user (questioning user) spends to obtain an answer regarding the question-target product, because there is no need for the questioning user to find option 4 (candidate answer 3) regarding the question-target product from among a large number of products including both registered and non-registered products.

Also, a program according to the embodiment causes one or more processors to execute the above answering method.

This produces an advantage of facilitating reduction of time and effort that the user (questioning user) spends to obtain an answer regarding the question-target product, because there is no need for the questioning user to find option 4 (candidate answer 3) regarding the question-target product from among a large number of products including both registered and non-registered products.

### [Industrial Applicability]

The present disclosure is applicable to an interactive answering system that is used for making an inquiry about a product.

### [Reference Signs List]

- 100: answering system
- 11: first obtainer
- 12: input receiver
- 13: second obtainer
- 14: processor
- 15: presenter
- 2: terminal device
- 21: communicator
- 22: display
- 3: candidate answer
- 30: error-handling answer
- 4, 4A: through 4E option
- ST1: first obtaining
- ST2: second obtaining
- ST3: processing
- ST4: presenting
- ST5: receiving

## Claims

1. An answering system (100) comprising:
a first obtainer (11) that obtains registered user information and registered product information on the registered user information;
a second obtainer (13) that obtains questioning user information on a questioning user;
a processor (14) that generates a candidate answer regarding the registered product information when the registered user information that matches the questioning user information obtained by the second obtainer (13) is present; and
a presenter (15) that presents the candidate answer generated by the processor (14),
**characterized in that** the first obtainer (11) further obtains error information on a registered product indicated in the registered product information by communicating with the registered product, the error information being state information indicating that an error is occurring in the registered product,
wherein the processor (14) assigns a degree of priority to the registered product information to increase the degree of priority of the registered product information that corresponds to the error information, and
the presenter (15) presents the candidate answer as an option, based on the degree of priority assigned by the processor (14).

2. The answering system (100) according to claim 1, further comprising:
an input receiver (12) that receives an input related to a question from the questioning user.

3. The answering system (100) according to claim 1 or 2,
wherein the processor (14) assigns the degree of priority, based on a date of purchase of a registered product indicated in the registered product information.

4. The answering system (100) according to any one of clams 1 to 3,
wherein the processor (14) assigns the degree of priority, based on a date of registration indicated in the registered product information.

5. The answering system (100) according to any one of claims 1 to 4,
wherein the processor (14) assigns the degree of priority, based on a usage history of a registered product indicated in the registered product information.

6. The answering system (100) according to any one of claims 1 to 5,
wherein the first obtainer (11) further obtains a history of questions asked by a registered user about a non-registered product that is not registered, and
the processor (14) provisionally registers the non-registered product as a registered product, based on the history obtained by the first obtainer (11).

7. The answering system (100) according to claim 6,
wherein the processor (14) generates guidance information for guiding the questioning user to a process for registration of the non-registered product, and
the presenter (15) further presents, as an option, the guidance information generated by the processor (14).

8. The answering system (100) according to any one of claims 1 to 7,
wherein the presenter (15) does not present the candidate answer regarding the registered product information when an answer regarding the registered product information is not present.

9. The answering system (100) according to any one of claims 1 to 8,
wherein the processor (14) generates reason information indicating a reason for generating the candidate answer, and
the presenter (15) presents the reason information.

10. A terminal device comprising:
a communicator that communicates with the answering system (100) according to any one of claims 1 to 9; and
a display (22) that, when the communicator receives the candidate answer presented by the presenter (15) of the answering system, displays the candidate answer received.

11. An answering method comprising:
first obtaining registered user information and registered product information on the registered user information;
second obtaining questioning user information on a questioning user;
processing to generate a candidate answer regarding the registered product information when the registered user information that matches the questioning user information obtained in the second obtaining is present; and
presenting the candidate answer generated in the processing,
wherein the first obtaining includes further obtaining error information on a registered product indicated in the registered product information by communicating with the registered product, the error information being state information indicating that an error is occurring in the registered product,
the processing includes assigning a degree of priority to the registered product information to increase the degree of priority of the registered product information that corresponds to the error information, and
in the presenting, the candidate answer is presented as an option, based on the degree of priority assigned in the processing.

12. The answering method according to claim 11, further comprising:
receiving an input related to a question from the questioning user.

13. A program for causing one or more processors to execute the answering method according to claim 11 or 12.

## Patentansprüche

1. Antwortsystem (100), umfassend:
einen ersten Erlanger (11), der registrierte Benutzerinformationen und registrierte Produktinformationen zu den registrierten Benutzerinformationen erlangt;
einen zweiten Erlanger (13), der fragende Benutzerinformationen zu einem fragenden Benutzer erlangt;
einen Prozessor (14), der eine Kandidatenantwort bezüglich der registrierten Produktinformationen erzeugt, wenn die registrierten Benutzerinformationen, die mit den durch den zweiten Erlanger (13) erlangten fragenden Benutzerinformationen übereinstimmen, vorhanden sind; und
einen Präsentierer (15), der die durch den Prozessor (14) erzeugte Kandidatenantwort präsentiert,
**dadurch gekennzeichnet, dass** der erste Erlanger (11) ferner Fehlerinformationen zu einem in den registrierten Produktinformationen angegebenen registrierten Produkt durch Kommunikation mit dem registrierten Produkt erlangt, wobei die Fehlerinformationen Zustandsinformationen sind, die angeben, dass ein Fehler in dem registrierten Produkt auftritt,
wobei der Prozessor (14) den registrierten Produktinformationen einen Prioritätsgrad zuweist, um den Prioritätsgrad der registrierten Produktinformationen, die den Fehlerinformationen entsprechen, zu erhöhen, und
der Präsentierer (15) die Kandidatenantwort als eine Option präsentiert, basierend auf dem durch den Prozessor (14) zugewiesenen Prioritätsgrad.

2. Antwortsystem (100) nach Anspruch 1, ferner umfassend:
einen Eingabeempfänger (12), der eine Eingabe bezogen auf eine Frage von dem fragenden Benutzer empfängt.

3. Antwortsystem (100) nach Anspruch 1 oder 2,
wobei der Prozessor (14) den Prioritätsgrad basierend auf einem Kaufdatum eines registrierten Produkts, das in den registrierten Produktinformationen angegeben ist, zuweist.

4. Antwortsystem (100) nach einem der Ansprüche 1 bis 3,
wobei der Prozessor (14) den Prioritätsgrad basierend auf einem Registrierungsdatum, das in den registrierten Produktinformationen angegeben ist, zuweist.

5. Antwortsystem (100) nach einem der Ansprüche 1 bis 4,
wobei der Prozessor (14) den Prioritätsgrad basierend auf einem Nutzungsverlauf eines registrierten Produkts, das in den registrierten Produktinformationen angegeben ist, zuweist.

6. Antwortsystem (100) nach einem der Ansprüche 1 bis 5,
wobei der erste Erlanger (11) ferner einen Verlauf von Fragen erlangt, die von einem registrierten Benutzer über ein nicht registriertes Produkt, das nicht registriert ist, gestellt wurden, und
der Prozessor (14) das nicht registrierte Produkt als ein registriertes Produkt vorläufig registriert, basierend auf dem durch den ersten Erlanger (11) erlangten Verlauf.

7. Antwortsystem (100) nach Anspruch 6,
wobei der Prozessor (14) Führungsinformationen zum Führen des fragenden Benutzers zu einem Prozess zur Registrierung des nicht registrierten Produkts erzeugt, und
der Präsentierer (15) ferner als eine Option die durch den Prozessor (14) erzeugten Führungsinformationen präsentiert.

8. Antwortsystem (100) nach einem der Ansprüche 1 bis 7,
wobei der Präsentierer (15) die Kandidatenantwort bezüglich der registrierten Produktinformationen nicht präsentiert, wenn eine Antwort bezüglich der registrierten Produktinformationen nicht vorhanden ist.

9. Antwortsystem (100) nach einem der Ansprüche 1 bis 8,
wobei der Prozessor (14) Grundinformationen erzeugt, die einen Grund zum Erzeugen der Kandidatenantwort angeben, und
der Präsentierer (15) die Grundinformationen präsentiert.

10. Endgerät, umfassend:
einen Kommunikator, der mit dem Antwortsystem (100) nach einem der Ansprüche 1 bis 9 kommuniziert; und
eine Anzeige (22), die, wenn der Kommunikator die durch den Präsentierer (15) des Antwortsystems präsentierte Kandidatenantwort empfängt, die empfangene Kandidatenantwort anzeigt.

11. Antwortverfahren, umfassend:
ein erstes Erlangen von registrierten Benutzerinformationen und registrierten Produktinformationen zu den registrierten Benutzerinformationen;
ein zweites Erlangen von fragenden Benutzerinformationen zu einem fragenden Benutzer;
eine Verarbeitung zum Erzeugen einer Kandidatenantwort bezüglich der registrierten Produktinformationen, wenn die registrierten Benutzerinformationen, die mit den in dem zweiten Erlangen erlangten fragenden Benutzerinformationen übereinstimmen, vorhanden sind; und
ein Präsentieren der in der Verarbeitung erzeugten Kandidatenantwort,
wobei das erste Erlangen ferner ein Erlangen von Fehlerinformationen zu einem in den registrierten Produktinformationen angegebenen registrierten Produkt durch Kommunikation mit dem registrierten Produkt umfasst, wobei die Fehlerinformationen Zustandsinformationen sind, die angeben, dass ein Fehler in dem registrierten Produkt auftritt,
die Verarbeitung ein Zuweisen eines Prioritätsgrades zu den registrierten Produktinformationen umfasst, um den Prioritätsgrad der registrierten Produktinformationen, die den Fehlerinformationen entsprechen, zu erhöhen, und
in dem Präsentieren die Kandidatenantwort als eine Option präsentiert wird, basierend auf dem in der Verarbeitung zugewiesenen Prioritätsgrad.

12. Antwortverfahren nach Anspruch 11, ferner umfassend:
ein Empfangen einer Eingabe bezogen auf eine Frage von dem fragenden Benutzer.

13. Programm zum Veranlassen eines oder mehrerer Prozessoren, das Antwortverfahren nach Anspruch 11 oder 12 auszuführen.

## Revendications

1. Système de réponse (100) comprenant :
un premier obtenteur (11) qui obtient des informations d'utilisateur enregistré et des informations de produit enregistré sur les informations d'utilisateur enregistré ;
un second obtenteur (13) qui obtient des informations d'utilisateur questionneur sur un utilisateur questionneur ;
un processeur (14) qui génère une réponse candidate concernant les informations de produit enregistré lorsque les informations d'utilisateur enregistré qui correspondent aux informations d'utilisateur questionneur obtenues par le second obtenteur (13) sont présentes ; et
un présentateur (15) qui présente la réponse candidate générée par le processeur (14),
**caractérisé en ce que** le premier obtenteur (11) obtient en outre des informations d'erreur sur un produit enregistré indiqué dans les informations de produit enregistré en communiquant avec le produit enregistré, les informations d'erreur étant des informations d'état indiquant qu'une erreur se produit dans le produit enregistré,
dans lequel le processeur (14) attribue un degré de priorité aux informations de produit enregistré pour augmenter le degré de priorité des informations de produit enregistré qui correspondent aux informations d'erreur, et
le présentateur (15) présente la réponse candidate en tant qu'option, sur la base du degré de priorité attribué par le processeur (14).

2. Système de réponse (100) selon la revendication 1, comprenant en outre :
un récepteur d'entrée (12) qui reçoit une entrée relative à une question de l'utilisateur questionneur.

3. Système de réponse (100) selon la revendication 1 ou 2,
dans lequel le processeur (14) attribue le degré de priorité sur la base d'une date d'achat d'un produit enregistré indiquée dans les informations de produit enregistré.

4. Système de réponse (100) selon l'une quelconque des revendications 1 à 3,
dans lequel le processeur (14) attribue le degré de priorité sur la base d'une date d'enregistrement indiquée dans les informations de produit enregistré.

5. Système de réponse (100) selon l'une quelconque des revendications 1 à 4,
dans lequel le processeur (14) attribue le degré de priorité sur la base d'un historique d'utilisation d'un produit enregistré indiqué dans les informations de produit enregistré.

6. Système de réponse (100) selon l'une quelconque des revendications 1 à 5,
dans lequel le premier obtenteur (11) obtient en outre un historique de questions posées par un utilisateur enregistré au sujet d'un produit non enregistré qui n'est pas enregistré, et
le processeur (14) enregistre provisoirement le produit non enregistré en tant que produit enregistré, sur la base de l'historique obtenu par le premier obtenteur (11).

7. Système de réponse (100) selon la revendication 6,
dans lequel le processeur (14) génère des informations de guidage pour guider l'utilisateur questionneur vers un processus d'enregistrement du produit non enregistré, et
le présentateur (15) présente en outre, en tant qu'option, les informations de guidage générées par le processeur (14).

8. Système de réponse (100) selon l'une quelconque des revendications 1 à 7,
dans lequel le présentateur (15) ne présente pas la réponse candidate concernant les informations de produit enregistré lorsqu'une réponse concernant les informations de produit enregistré n'est pas présente.

9. Système de réponse (100) selon l'une quelconque des revendications 1 à 8,
dans lequel le processeur (14) génère des informations de raison indiquant une raison pour générer la réponse candidate, et
le présentateur (15) présente les informations de raison.

10. Dispositif terminal comprenant :
un communicateur qui communique avec le système de réponse (100) selon l'une quelconque des revendications 1 à 9 ; et
un afficheur (22) qui, lorsque le communicateur reçoit la réponse candidate présentée par le présentateur (15) du système de réponse, affiche la réponse candidate reçue.

11. Procédé de réponse comprenant :
une première obtention d'informations d'utilisateur enregistré et d'informations de produit enregistré sur les informations d'utilisateur enregistré ;
une seconde obtention d'informations d'utilisateur questionneur sur un utilisateur questionneur ;
un traitement pour générer une réponse candidate concernant les informations de produit enregistré lorsque les informations d'utilisateur enregistré qui correspondent aux informations d'utilisateur questionneur obtenues dans la seconde obtention sont présentes ; et
une présentation de la réponse candidate générée dans le traitement,
dans lequel la première obtention inclut l'obtention en outre d'informations d'erreur sur un produit enregistré indiqué dans les informations de produit enregistré en communiquant avec le produit enregistré, les informations d'erreur étant des informations d'état indiquant qu'une erreur se produit dans le produit enregistré,
le traitement inclut l'attribution d'un degré de priorité aux informations de produit enregistré pour augmenter le degré de priorité des informations de produit enregistré qui correspondent aux informations d'erreur, et
dans la présentation, la réponse candidate est présentée en tant qu'option, sur la base du degré de priorité attribué dans le traitement.

12. Procédé de réponse selon la revendication 11, comprenant en outre :
la réception d'une entrée relative à une question de l'utilisateur questionneur.

13. Programme pour amener un ou plusieurs processeurs à exécuter le procédé de réponse selon la revendication 11 ou 12.
